# EUROPÄISCHE PATENTANMELDUNG

(11) **EP 4 589 420 A1**
(43) Veröffentlichungstag der Anmeldung: **23.07.2025**
(21) Anmeldenummer: 24152762.1
(22) Anmeldetag: 19.01.2024
(51) Int. Cl.: G06F 8/30, G06F 8/658, G06F 11/36, G06F 21/57, G06N 20/00, G06F 8/53, G06N 3/08

(54) **AUTOMATISIERTE ERZEUGUNG VON PATCHES EINER EMBEDDED SOFTWARE**

(71) Anmelder: Robert Bosch GmbH, 70442 Stuttgart (DE)
(72) Erfinder: Huth, Christopher, 74076 Heilbronn (DE); Ring, Martin, 72290 Lossburg (DE)

(57) **Zusammenfassung**

Offenbart wird ein computer-implementiertes Verfahren für die automatisierte Erzeugung eines Patch einer Software oder eines Teils der Software, insbesondere wobei die Software dafür ausgelegt ist, ein technisches System oder einen Teil davon zu steuern, regeln und/oder zu überwachen, umfassend Erzeugen, via ein Maschinenlernmodell, mindestens eines Patch für eine Vulnerabilität der Software oder deren Teils basierend auf einem Prompt und einem Binärcode der Software oder deren Teils, optional, wobei das Maschinenlernmodell ein Foundation Model und/oder Large Language Model (LLM) umfasst.

Offenbart wird ein computer-implementiertes Verfahren zum weiteren Trainieren eines Maschinenlernmodells, wobei das Maschinenlernmodell dafür ausgelegt ist, mindestens einen Patch für eine Vulnerabilität einer Software oder eines Teils der Software basierend auf einem Prompt und einem Binärcode der Software oder deren Teils zu erzeugen; das Verfahren umfassend Anpassen des Maschinenlernmodells basierend auf mindestens einem erzeugten Patch und auf mindestens einem durch Bewerten des mindestens einen Patch resultierenden Bewertungsergebnis.

## Beschreibung

### Stand der Technik

Embedded Software zum Steuern, Regeln und/oder Überwachen technischer Systeme, insbesondere cyber-physischer Systeme wie z.B. Recheneinheiten eines Fahrzeugs, eines Roboters und/oder einer Industrieanlage, weist üblicherweise einen hohen Komplexitätsgrad auf. Aufgrund dessen ist es für einzelne Software-Ingenieure und selbst für ganze Software-Entwicklungsabteilungen herausfordernd, den Überblick über die Software und ihre Änderungen, insbesondere in ihrem gesamten Lebenszyklus (Entwicklung, Test, Produktion und Wartung) zu behalten.

Software kann fehleranfällig sein und muss daher eingehend und über den Lebenszyklus der Software getestet werden. Das Testen von (embedded) Software wird häufig in einen formalisierten Validierungs- und Verifizierungsprozess (V & V) eingebunden und unterliegt einem Freigabeprozess. Software kann zum Beispiel durch statische und/oder dynamische Software-Tests auf Fehler geprüft werden, wobei bei statischen Software-Tests im Gegensatz zu dynamischen Software-Tests die Software nicht ausgeführt wird.

Besonders problematisch sind vor allem Fehler oder Vulnerabilitäten (auch: Schwachstellen), die - abgesehen von der Funktionalität der Software - die Sicherheit der Software, mithin des von ihr gesteuerten, geregelten und/oder überwachten technischen Systems, beeinträchtigen oder gar gefährden. Diese Anfälligkeit ist besonders groß, wenn das technische System eine Schnittstelle zu einem öffentlichen Netzwerk (z.B. zum Internet) aufweist, weil dann ein Angreifer versuchen könnte, über diese Schnittstelle die Vulnerabilität der Software auszunutzen.

Wird über den Lebenszyklus der Software eine Vulnerabilität der Software bekannt, kann und sollte für die Software ein Patch erzeugt werden, um diese Vulnerabilität zu verhindern. Dabei besteht häufig großer Handlungsbedarf, insbesondere wenn die Software einen oder mehrere externe Teile aufweist, für die eine Vulnerabilität allgemein bekannt wird, z.B. über eine Common Vulnerabilities and Exposures (CVE) Datenbank. Die Erstellung von Patches ist trotz Unterstützung einiger Tools bisher immer noch eine überwiegend manuelle Arbeit und entsprechend langwierig und teuer. Im Hinblick auf die Komplexität der Software und die Zeitkritikalität wäre daher ein höherer Automatisierungsgrad wünschenswert.

Der Offenbarung liegt daher das Problem zugrunde, automatisiert aber dennoch verlässlich Patches für eine Software bereitzustellen.

### Offenbarung der Erfindung

Ein erster allgemeiner Aspekt der vorliegenden Offenbarung betrifft ein computer-implementiertes Verfahren für die automatisierte Erzeugung eines Patch einer Software oder (für die automatisierte Erzeugung eines Patch) eines Teils der Software. Das Verfahren umfasst Erzeugen, via ein Maschinenlernmodell, mindestens eines Patch für eine Vulnerabilität der Software oder deren Teils basierend auf einem Prompt und einem Binärcode der Software oder deren Teils. Das (vorab trainierte) Maschinenlernmodell kann ein Foundation Model und/oder ein Large Language Model (LLM) umfassen.

Die Software kann eine embedded Software sein. Die (embedded) Software kann dafür ausgelegt sein, ein technisches System oder einen Teil davon zu steuern, regeln und/oder zu überwachen. Das technische System kann insbesondere ein cyber-physisches System sein. Insbesondere kann die Software - und sodann die durch den mindestens einen erzeugten Patch geänderte Software - dafür ausgelegt sein, in einem cyber-physischen System, insbesondere in mindestens einer Recheneinheit eines Fahrzeugs, eines Roboters oder einer Industrieanlage ausgeführt zu werden. Die Software kann zum Beispiel für eine sicherheitskritische Aufgabe, insbesondere für eine Wahrnehmungsaufgabe, eine autonome Bewegung, ein Antreiben, ein Bremsen, und/oder ein Airbagsteuern ausgelegt sein.

Das Verfahren kann Ändern der Software basierend auf dem mindestens einen erzeugten Patch umfassen. Das Verfahren kann Ausführen der durch den mindestens einen erzeugten Patch geänderten Software in dem technischen System, insbesondere in dem cyber-physischen System umfassen.

Ein zweiter allgemeiner Aspekt der vorliegenden Offenbarung betrifft ein computer-implementiertes Verfahren zum weiteren Trainieren eines Maschinenlernmodells, wobei das Maschinenlernmodell dafür (vorab trainiert und) ausgelegt ist, mindestens einen Patch für eine Vulnerabilität einer Software oder eines Teils der Software basierend auf einem Prompt und einem Binärcode der Software oder deren Teils zu erzeugen. Das Verfahren umfasst Anpassen des Maschinenlernmodells basierend auf mindestens einem nach dem Verfahren nach dem ersten allgemeinen Aspekt (oder einer Ausführungsform davon) erzeugten Patch und auf mindestens einem durch Bewerten des mindestens einen Patch resultierenden Bewertungsergebnis.

Ein dritter allgemeiner Aspekt der vorliegenden Offenbarung betrifft ein Computer-System, das dafür ausgelegt ist, das computer-implementierte Verfahren für die automatisierte Erzeugung eines Patch einer Software oder eines Teils der Software nach dem ersten allgemeinen Aspekt (oder einer Ausführungsform davon) und/oder das computer-implementierte Verfahren zum weiteren Trainieren eines Maschinenlernmodells nach dem zweiten allgemeinen Aspekt (oder einer Ausführungsform davon) auszuführen.

Ein vierter allgemeiner Aspekt der vorliegenden Offenbarung betrifft ein Computer-Programm, das dafür ausgelegt ist, das computer-implementierte Verfahren für die automatisierte Erzeugung eines Patch einer Software oder eines Teils der Software nach dem ersten allgemeinen Aspekt (oder einer Ausführungsform davon) und/oder das computer-implementierte Verfahren zum weiteren Trainieren eines Maschinenlernmodells nach dem zweiten allgemeinen Aspekt (oder einer Ausführungsform davon) auszuführen.

Ein fünfter allgemeiner Aspekt der vorliegenden Offenbarung betrifft ein computer-lesbares Medium oder Signal, das das Computer-Programm nach dem vierten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die automatisierte Erzeugung von Patches (mindestens eines Patch) der Software gerichtet. Der hohe Grad der Automatisierung ermöglicht es, jederzeit und insbesondere immer dann die Software anzupassen, wenn eine Vulnerabilität bekannt wird, d.h. zeitnah nach Bekanntwerden der Vulnerabilität. Dadurch werden Vulnerabilitäten so schnell wie möglich verhindert. Dies wird durch das Maschinenlernmodell mit einem hinreichend großen Maschinensprachverständnis und, in Ausführungsformen, durch das automatisierte Bewerten des mindestens einen Patch der Software nach etablierten V & V Methoden erreicht. Dadurch kann eine maschinelle Kreativität des Maschinenlernmodells genutzt werden, zugleich aber die Qualität der Patches, mithin der durch die Patches geänderten Software ("gepatchte Software") gesichert werden. In anderen Worten: Fehler, insbesondere fehlerhafte Patches, die gelegentlich durchaus durch das Maschinenlernmodell entstehen können, werden verlässlich oder zumindest mit hinreichend großer Wahrscheinlichkeit durch die V & V Methoden erkannt, bevor derart gepatchte Software zum Einsatz kommt. Dadurch können die Funktionalität und die Sicherheit der Software und zum Beispiel des durch die Software gesteuerten, geregelten und/oder überwachten technischen Systems wie z.B. eines Fahrzeugs, eines Roboters und/oder einer Industrieanlage verbessert werden.

Zudem kann jederzeit im Lebenszyklus der Software getestet werden, ob die Software von einer Vulnerabilität betroffen ist.

Ein Vorteil des Verfahrens nach dem ersten allgemeinen Aspekt (oder einer Ausführungsform davon) besteht darin, dass Patches ausgehend von Binärcode und/oder, in Ausführungsformen, von aus dem Binärcode dekompilierten Code erzeugt werden. Die Patches werden somit gerade nicht auf einem oder mehreren Quellcodes, die mitunter in unterschiedlichen Programmiersprachen geschrieben sein können, erzeugt. Dadurch ist das Verfahren für Software in beliebigen kompilierbaren Programmiersprachen gleichermaßen anwendbar und muss nicht - wie bisher - an eine bestimmte Programmiersprache aufwendig angepasst bzw. neu entwickelt werden. Vorteilhaft ist auch, dass das Verfahren auch dann zum Einsatz kommen kann, wenn wie z.B. oft bei externen Softwareteilen der Quellcode nicht zur Verfügung steht.

Dank des hohen Automatisierungsgrads kann für eine Vulnerabilität der Software eine Vielzahl von Patches erzeugt werden. Insbesondere durch die Variabilität (z.B. durch eine Zufallsauswahl) in der Ausgabe des Maschinenlernmodells (was im Fachjargon als Temperatur bezeichnet werden kann) können viele unterschiedliche Patches erzeugt werden und im Anschluss bewertet werden. Der beste Patch kann dann ausgewählt werden und die Software durch diesen Patch geändert werden.

Das vorgeschlagene Verfahren kann auch verwendet werden, um eine bereits vorhandene Menge von Patches um weitere Patches zu ergänzen, die z.B. einen anderen Zweck erfüllen und/oder andere Aspekte abdecken sollen. Zudem können vorhandene Patches, die nicht hinreichend gut bewertet worden sind, in weiteren Iterationen des Verfahrens angepasst, verbessert und/oder korrigiert werden.

Ein weiterer Vorteil besteht darin, dass die resultierenden Patches sowie deren Bewertungen dazu genutzt werden können, einen domänen-spezifischen Patchgenerator weiter zu trainieren. Dies kann zum Beispiel wie im Verfahren 200 nach dem zweiten allgemeinen Aspekt (oder einer Ausführungsform davon) erfolgen. Dadurch kann überwachtes Finetuning und/oder unüberwachtes (Reinforcement) Learning basierend auf den Bewertungsergebnissen durchgeführt werden, mithin das Verfahren nach dem ersten allgemeinen Aspekt (oder einer Ausführungsform davon) verbessert werden. Dadurch können dann (zukünftig) noch verlässlicher Patches für die Software erzeugt werden. Auch hier erweist sich die für eine Vulnerabilität erzeugte Vielzahl von Patches als vorteilhaft, weil diese die Menge der Trainingsdaten vergrößern, auf deren Basis das Maschinenlernmodell weiter trainiert werden kann.

### Kurzbeschreibung der Figuren

**Fig.** 1a illustriert schematisch beispielhafte Ausführungsformen eines computerimplementierten Verfahrens für die automatisierte Erzeugung eines Patch einer Software oder eines Teils der Software.
**Fig. 1b** illustriert schematisch eine beispielhafte Ausführungsform eines computerimplementierten Verfahrens für die automatisierte Erzeugung eines Patch einer Software oder eines Teils der Software.
**Fig. 2** illustriert schematisch beispielhafte Ausführungsformen eines computerimplementierten Verfahrens zum weiteren Trainieren eines Maschinenlernmodells, dafür ausgelegt, mindestens einen Patch für eine Vulnerabilität einer Software oder eines Teils der Software basierend auf einem Prompt und einem Binärcode der Software oder deren Teils zu erzeugen.

### Detaillierte Beschreibung

Das in dieser Offenbarung vorgeschlagene Verfahren 100 ist auf die automatisierte Erzeugung von Patches einer Software zur Vermeidung von Vulnerabilitäten gerichtet. Insbesondere kann die Software eine embedded Software sein, die dafür ausgelegt ist, auf einem eingebetteten (d.h. z.B. aufgabenspezifischen) System ausgeführt zu werden. Dieses System kann eine Recheneinheit sein. Häufig ist diese Recheneinheit ein Steuergerät oder eine elektronische Steuereinheit (ECU). Softwarefehler, und insbesondere ausnutzbare Fehler (Vulnerabilitäten, auch: Schwachstellen), sind ein großes Problem für die Cybersicherheit. Dies gilt nicht nur für Server-Software, sondern grundsätzlich für jede Software. Sobald diese Software aber dem Internet ausgesetzt ist, erhöhen sich die Angriffsmöglichkeiten erheblich, da sich Angriffe auf eine solche Software auf alle verbundenen Instanzen ausweiten können. Auf der anderen Seite wäre es ab einem gewissen Komplexitätsgrad beliebig teuer, gänzlich fehlerfreie Software zu entwickeln. So sehr versucht wird, Fehler und insbesondere Vulnerabilitäten in der Software bereits vor der Freigabe zu vermeiden, kann nie ausgeschlossen werden, dass Software mit Fehlern und/oder Vulnerabilitäten ausgeliefert wird und z.B. in einem technischen System zum Einsatz kommt. Daher ist es vor allem bei sicherheitskritischen Anwendungen wichtig, dass Software auch noch nach der Auslieferung und je nach Kritikalität gepatcht werden kann.

Auch das Patchen ist teuer - die Entwickler müssen z.B. den Fehler und/oder die Vulnerabilität reproduzieren, die Kritikalität einschätzen und dann einen geeigneten Patch schreiben, der alle Freigabekriterien erfüllt. Dies setzt voraus, dass der Fehler bereits entdeckt wurde.

Vulnerabilitäten von externen Teilen einer Software können zum Beispiel durch eine Datenbank für Vulnerabilitäten (Common Vulnerabilities and Exposures (CVE) Datenbank) allgemein bekannt werden. Das folgende Beispiel aus der National Vulnerability Database des National Institute of Standards and Technology (NIST), https://nvd.nist.gov/vuln/detail/CVE-2017-14937, zeigt, dass eine Vulnerabilität durch eine natürlichsprachliche Beschreibung gegeben sein kann:
"CVE-2017-14937 Detail

### Description

The airbag detonation algorithm allows injury to passenger-car occupants via predictable Security Access (SA) data to the internal CAN bus (or the OBD connector). This affects the airbag control units (aka pyrotechnical control units or PCUs) of unspecified passenger vehicles manufactured in 2014 or later, when the ignition is on and the speed is less than 6 km/h. Specifically, there are only 256 possible key pairs, and authentication attempts have no rate limit. In addition, at least one manufacturer's interpretation of the ISO 26021 standard is that it must be possible to calculate the key directly (i.e., the other 255 key pairs must not be used). Exploitation would typically involve an attacker who has already gained access to the CAN bus, and sends a crafted Unified Diagnostic Service (UDS) message to detonate the pyrotechnical charges, resulting in the same passengerinjury risks as in any airbag deployment."

Insbesondere zur Verarbeitung solcher natürlichsprachlicher Beschreibungen kann zum Beispiel ein Large Language Model (LLM) als Maschinenlernmodell 30 verwendet werden. Das Ziel besteht darin, die vulnerable Software automatisiert zu patchen. Dazu kann Software und insbesondere deren Binärcode (d.h. deren ein oder mehrere Binärdateien) kontinuierlich auf Vulnerabilitäten (auch: Schwachstellen) getestet und analysiert werden. Wird eine solche Vulnerabilität gefunden, kann automatisiert ein Patch erstellt werden.

Maschinenlernmodelle, insbesondere Large Language Models, werden zunehmend leistungsstark und haben bereits jetzt das Potenzial, ähnlich kleine Irrtumsraten wie der menschliche Geist zu erreichen. Dennoch können Maschinenlernmodelle - ebenso wie ein Software-Ingenieur - falsche Antworten generieren. Daher werden die erzeugten Patches vorzugsweise automatisiert bewertet.

Hierzu können Verifizierungs- und Validierungsmethoden (V & V) zum Einsatz kommen, anhand derer der erzeugte Patch bewertet werden kann. Dadurch können z.B. mehr, weniger oder andere Probleme mit der gepatchten Software festgestellt werden. Außerdem kann (und sollte) der Patch auf identische (oder verbesserte) Funktionalität wie die ursprüngliche Binärdatei getestet werden. Fallen alle Tests hinreichend zufriedenstellend aus, kann eine durch den Patch geänderte Software (gepatchte Software), insbesondere eine oder mehrere gepatchte Binärdateien für den Einsatz freigegeben werden.

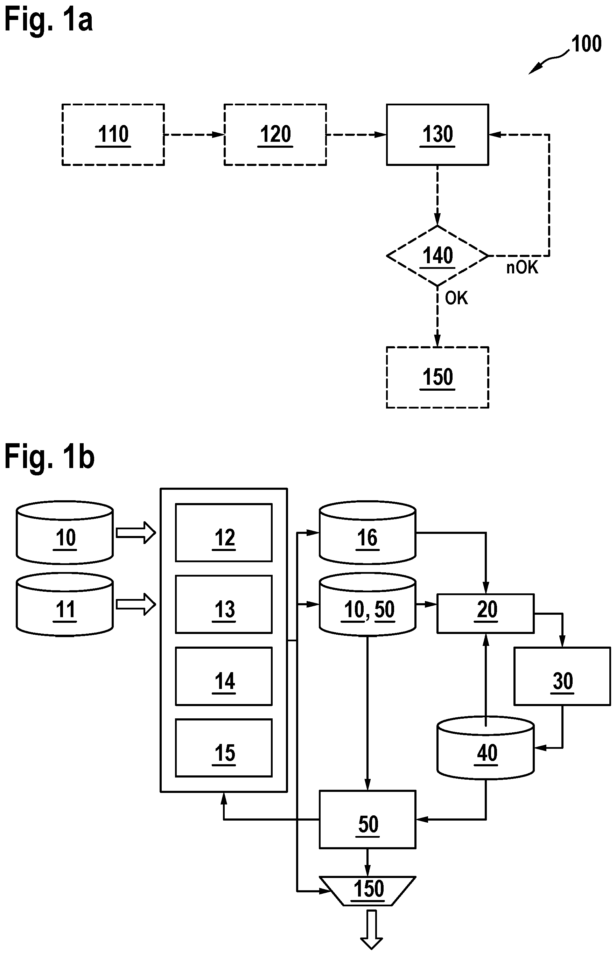

Offenbart wird zunächst ein computer-implementiertes Verfahren 100, wie z.B. schematisch illustriert in **Fig. 1a****-b,** für die automatisierte Erzeugung eines Patch einer Software oder eines Teils der Software (d.h. für die Erzeugung eines Patch einer Software oder eines Patch eines Teils der Software).

Das Verfahren 100 umfasst Erzeugen 130, via ein Maschinenlernmodell 30, mindestens eines Patch 40 für eine Vulnerabilität der Software oder deren Teils basierend auf einem Prompt 20 und einem Binärcode 10 der Software oder deren Teils.

Die Software kann einen Binärcode, insbesondere einen oder mehrere Binärdateien (z.B. ausführbare Dateien und/oder Bibliotheken) umfassen. Im Falle mehrerer Binärdateien, kann ein Teil der Software z.B. eine Binärdatei sein. Der Teil der Software kann auch ein Teil einer Binärdatei sein.

Der mindestens eine erzeugte Patch 40 kann ebenfalls ein Code, insbesondere ebenfalls ein Binärcode sein, der die Software, den Teil der Software oder einen Unterteil des Teils der Software ersetzt, wobei der durch den Patch geänderte Teil der Software und/oder die durch den Patch geänderte Software resultieren.

Das Maschinenlernmodell 30 kann ein Foundation Model und/oder ein Large Language Model (LLM) umfassen. Insbesondere kann das Maschinenlernmodell 30 ein Foundation Model und/oder ein Large Language Model (LLM) sein.

Das Verfahren 100 kann Erzeugen einer Vielzahl von Patches für die Vulnerabilität umfassen.

Die Software kann dafür ausgelegt sein, ein technisches System oder einen Teil davon zu steuern, regeln und/oder zu überwachen. Die Software kann eine embedded Software sein. Die embedded Software kann dafür ausgelegt sein, ein technisches System oder einen Teil davon zu steuern, regeln und/oder zu überwachen. Das technische System kann insbesondere ein cyber-physisches System sein. Insbesondere kann die Software - und sodann die durch den mindestens einen erzeugten Patch geänderte Software - dafür ausgelegt sein, in einem cyber-physischen System, insbesondere in mindestens einer Recheneinheit eines Fahrzeugs, eines Roboters oder einer Industrieanlage ausgeführt zu werden. Insbesondere kann das technische System das Fahrzeug, der Roboter oder die Industrieanlage sein. Die Software kann zum Beispiel für eine sicherheitskritische Aufgabe, insbesondere für eine Wahrnehmungsaufgabe, eine autonome Bewegung (z.B. autonomes Fahren eines Fahrzeugs oder autonomes Fortbewegen eines Roboters), ein Antreiben, ein Bremsen, und/oder ein Airbagsteuern ausgelegt sein.

Das Verfahren 100 kann, wie z.B. in **Fig. 1a** schematisch illustriert, Dekompilieren 110 des Binärcode 10 umfassen, wobei ein dekompilierter Code, insbesondere eine Zwischendarstellung des Binärcode, ein Maschinencode und/oder ein Assembly-Code resultiert (d.h. erzeugt wird), wobei das Erzeugen 130 des mindestens einen Patch 40 auf dem dekompilierten Code basiert. Der dekompilierte Code kann aber muss kein Quellcode sein. Die Zwischendarstellung des Binärcode kann, muss aber nicht Maschinencode und/oder Assembly-Code sein. Die Zwischendarstellung kann eine Darstellung zwischen dem Binärcode und dem Quellcode sein. Die Zwischendarstellung des Binärcode kann zum Beispiel einen Kontrollflussgraphen der Software umfassen.

Der Prompt kann eine natürlichsprachliche Anweisung an das Maschinenlernmodell umfassen. Die natürlichsprachliche Anweisung kann eine Aufforderung umfassen, mindestens einen oder eine Vielzahl von Patches für eine Vulnerabilität im Binärcode 10 zu erzeugen. Der Prompt 20 kann den Binärcode 10 umfassen. Alternativ oder zusätzlich kann der Prompt 20 den dekompilierten Code umfassen. Insbesondere kann der Prompt 20 den Binärcode 10 und den dekompilierten Code umfassen.

Alternativ oder zusätzlich kann im Verfahren 100 der mindestens eine Patch 40 für eine Vulnerabilität der Software oder deren Teils basierend auf dem Prompt 20 und einer Zwischendarstellung des Binärcode (z.B. einem Maschinencode oder Assembly-Code der Software) erzeugt 130 werden. Das Verfahren 100 kann dann Übersetzen eines oder mehrerer Quellcodes der Software in die Zwischendarstellung des Binärcode (z.B. in den Maschinencode und/oder in den Assembly-Code) umfassen.

Das Verfahren 100 kann, wie z.B. in **Fig. 1a** schematisch illustriert, Auffinden 120 der Vulnerabilität basierend auf dem Binärcode 10 umfassen. Alternativ oder zusätzlich, kann das Verfahren 100 Auffinden 120 der Vulnerabilität basierend auf dem dekompilierten Code umfassen. Insbesondere kann das Verfahren 100 Auffinden 120 der Vulnerabilität basierend auf dem Binärcode und dem dekompilierten Code umfassen.

Das Auffinden 120 der Vulnerabilität kann auf einem oder mehreren Angrifftests 12 basieren.

Alternativ oder zusätzlich kann das Auffinden 120 der Vulnerabilität auf einer (wie oben beispielhaft wiedergegebenen) oder mehreren Beschreibungen mindestens einer bekannten Vulnerabilität basieren. Insbesondere kann das Auffinden 120 der Vulnerabilität auf mindestens einem Angrifftest 12 und mindestens einer Beschreibung einer Vulnerabilität basieren. Die Beschreibung der mindestens einen bekannten Vulnerabilität kann ein (natürlich-sprachlicher) Text sein.

Ein Angrifftest kann ein ausführbares Skript oder Programm umfassen, das dafür ausgelegt ist, zu testen, ob die Vulnerabilität der Software bei deren Ausführung ausgenutzt werden kann.

Das Verfahren 100 kann Erzeugen des Angrifftests, insbesondere via ein weiteres Maschinenlernmodell, basierend auf dem Binärcode 10 und einem weiteren Prompt umfassen. Alternativ oder zusätzlich kann das Erzeugen des Angrifftests auf dem dekompilierten Code oder der anderweitig erzeugten Zwischendarstellung des Binärcode (z.B. Maschinencode oder Assembly-Code der Software) basieren. Alternativ oder zusätzlich kann das Erzeugen des Angrifftests auf der Beschreibung der mindestens einen bekannten Vulnerabilität basieren. Das weitere Maschinenlernmodell kann ein weiteres Foundation Model und/oder ein weiteres Large Language Model umfassen (oder sein). Das weitere Maschinenlernmodell kann, muss aber nicht das Maschinenlernmodell sein.

Das Auffinden 120 der Vulnerabilität, insbesondere das Erzeugen des Angrifftests, basierend auf der Beschreibung der mindestens einen bekannten Vulnerabilität kann auf dem weiteren Maschinenlernmodell basieren. Alternativ oder zusätzlich kann das Auffinden 120 der Vulnerabilität auf Parsing und/oder auf einer Eingabe über eine Benutzerschnittstelle basieren. Alternativ oder zusätzlich kann das Auffinden 120 der Vulnerabilität (wie z.B. beim Bewerten 140) auf einem statischen Test der Software oder deren Teils basieren, insbesondere basierend auf dem dekompilierten Code oder der anderweitig erzeugten Zwischendarstellung des Binärcode (z.B. Maschinencode oder Assembly-Code der Software). Alternativ oder zusätzlich kann das Auffinden 120 der Vulnerabilität (wie z.B. beim Bewerten 140) auf einem dynamischen Test der Software oder deren Teils basieren.

Durch das Auffinden 120 der Vulnerabilität können eine oder mehrere Stellen 16 im Binärcode und/oder im dekompilierten Code ermittelt werden. Die eine oder mehreren Stellen können zum Beispiel durch eine stacktrace eines Absturzes in einem dynamischen Test codiert werden. Eine stacktrace kann zum Beispiel eine Aufzeichnung der letzten Funktionen bis zum Zeitpunkt des Absturzes umfassen. Der Prompt 20 kann, wie beispielhaft in **Fig. 1b** illustriert, die eine oder die mehreren Stellen 16 der Vulnerabilität umfassen.

Das Verfahren 100 kann, wie z.B. in **Fig. 1a** schematisch illustriert, Bewerten 140 des mindestens einen Patch 40 umfassen, wobei ein Bewertungsergebnis resultiert. Mithin kann das Verfahren 100 Bewerten der durch den Patch geänderten Software (d.h. der gepatchten Software) umfassen. Das Bewertungsergebnis kann zum Beispiel eine binäre Variable (z.B. 0 oder, wie in **Fig. 1a****, "**nOK" für ein negatives Bewertungsergebnis bzw. 1 oder "OK" für ein positives Bewertungsergebnis umfassen. Alternativ oder zusätzlich kann das Bewertungsergebnis eine Variable mit einer Vielzahl von Werten, insbesondere für einen Grad der Positivität des Bewertungsergebnisses umfassen.

Im Falle, dass für die Vulnerabilität eine Vielzahl von Patches erzeugt 130 wird, können im Verfahren 100 mehrere, insbesondere alle, dieser Patches bewertet werden 140. In diesem Fall kann je bewerteten Patch ein jeweiliges Bewertungsergebnis resultieren oder solche Bewertungsergebnisse in einem Bewertungsergebnis enthalten sein und/oder kombiniert werden.

Das Bewerten 140 des mindestens einen Patch kann einen statischen Test 12 der durch den Patch geänderten Software 50 oder deren durch den Patch geänderten Teil umfassen. Alternativ oder zusätzlich kann das Bewerten 140 des mindestens einen Patch einen dynamischen Test 13 der durch den Patch geänderten Software oder deren durch den Patch geänderten Teil umfassen. Alternativ oder zusätzlich kann das Bewerten 140 des mindestens einen Patch einen Angriffstest 14 der durch den Patch geänderten Software oder deren durch den Patch geänderten Teil umfassen. Alternativ oder zusätzlich kann das Bewerten 140 des mindestens einen Patch einen Vergleichstest 15 umfassen, der dafür ausgelegt ist, die Software oder deren Teil mit der durch den Patch geänderten Software oder deren durch den Patch geänderten Software zu vergleichen. Hierbei kann insbesondere geprüft werden, ob die Software und die gepatchte Software im Hinblick auf Funktionalität identisch sind. Alternativ oder zusätzlich kann hier geprüft werden, ob die gepatchte Software besser als die Software ist (z.B. kürzere Laufzeit, weniger Speicherbedarf, geringerer Energieverbrauch etc.). Alternativ oder zusätzlich kann das Bewerten 140 des mindestens einen Patch einen nicht-funktionalen Test der durch den Patch geänderten Software oder deren durch den Patch geänderten Teil umfassen. Der nicht-funktionale Test kann insbesondere die Performanz, Laufzeit und/oder den Speicherbedarf der durch den Patch geänderten Software testen. Wie z.B. in **Fig. 1b** schematisch dargestellt, kann das Bewerten 140 des mindestens einen Patch einen statischen Test 12 einen dynamischen Test 13, einen Angriffstest 14 und einen Vergleichstest 15 umfassen. Das Bewertungsergebnis kann nach einem vorbestimmten Kriterium (oder mehreren Kriterien) aus Ergebnissen eines oder mehrerer dieser Tests bestimmt werden.

Der (mindestens eine) statische Test kann auf abstrakter Interpretation und Taint checking basieren. Hierzu muss die Software oder deren Teil nicht ausgeführt werden.

Der (mindestens eine) dynamische Test kann darauf ausgelegt sein, die Software oder deren Teil auf (zum Zeitpunkt des Tests) vorbestimmten Eingangsdaten auszuführen und dabei zu testen, ob ein Absturz auftritt. Ein solcher Absturz kann zum Beispiel durch eine stacktrace im Bewertungsergebnis dokumentiert werden. Der dynamische Test kann auf Fuzzing basieren. Beim Fuzzing kann die Software oder deren Teil durch eine Vielzahl vorbestimmter Eingangsdaten (in sogenannten Fuzzing-Iterationen) dynamisch getestet werden. Dynamische Tests können auf unterschiedlichen Integrationsstufen der Software angewandt werden.

Im Falle eines Angrifftests kann zum Beispiel dann ein positives Bewertungsergebnis ausgegeben werden, wenn die Vulnerabilität nicht mehr ausgenutzt werden konnte.

Das Verfahren 100 kann bei einer Vielzahl von Tests zum Bewerten des mindestens einen Patch sukzessives Berechnen des Bewertungsergebnisses für den mindestens einen erzeugten Patch umfassen. Das Verfahren 100 kann Abbrechen des Bewertens 140 des mindestens einen Patch umfassen, wenn das Bewertungsergebnis bereits (hinreichend) negativ ist. Dadurch können Zeit, Energie und Kosten gespart werden.

Das Verfahren kann Ändern der Software oder deren Teils basierend auf dem mindestens einen erzeugten Patch umfassen. Das Ändern der Software oder deren Teils kann Ersetzen einer oder mehrerer Binärdateien des Binärcode umfassen und zwar durch eine oder mehrere gepatchte Binärdateien.

Das Verfahren kann Ausführen der durch den mindestens einen erzeugten Patch geänderten Software in dem technischen System, insbesondere in dem cyber-physischen System umfassen.

Der mindestens eine Patch kann, wie z.B. in **Fig. 1a****-b** schematisch illustriert, freigeben 150 werden, wenn das Bewertungsergebnis positiv (OK) ist. Alternativ oder zusätzlich kann die Freigabe der durch den mindestens einen Patch geänderten Software (auch gepatchte Software) davon abhängig gemacht werden (z.B. als notwendige Bedingung), dass der mindestens eine Patch freigegeben wurde. Die Freigabe der durch eine Vielzahl von Patches geänderten Software kann davon abhängig gemacht werden, dass jeder Patch der Vielzahl der Patches freigegeben wurde.

Im Falle, dass für die Vulnerabilität eine Vielzahl von Patches erzeugt 130 und bewertet 140 werden, kann aufgrund des jeweiligen Bewertungsergebnisses ein Patch (d.h. der mindestens eine Patch) aus der Vielzahl der Patches ausgewählt werden. Dies kann innerhalb des Verfahrens 100 automatisiert und/oder über eine Benutzerschnittstelle (z.B. in einer elektronischen Programmierumgebung) manuell erfolgen.

Das Verfahren 100 kann, wie z.B. in **Fig. 1a** schematisch illustriert, wiederholt werden 151, wenn das Bewertungsergebnis negativ (nOK) ist. Dabei kann mindestens ein weiterer Patch basierend auf dem mindestens einen Patch 40 erzeugt werden.

Der Prompt für die erneute Ausführung des Verfahrens 100 kann den mindestens einen Patch 40 umfassen. Der Prompt für die erneute Ausführung des Verfahrens 100 kann eine Aufforderung umfassen, den mindestens einen Patch 40, insbesondere im Hinblick auf das Bewertungsergebnis, zu verbessern und/oder zu korrigieren. Zum Beispiel, wenn bereits gepatchte Software nur kleinere Laufzeitprobleme an bestimmten Stellen aufweist, können diese Stellen erneut in das Maschinenlernmodell eingespeist werden und gezielt verbessert werden. Das Erzeugen des mindestens einen Patch in der erneuten Ausführung des Verfahrens 100 kann auf der durch den mindestens einen Patch 40 geänderten Software oder den durch den mindestens einen Patch 40 geänderten Teil der Software basieren. Hierzu kann zum Beispiel der Binärcode vor der erneuten Ausführung des Verfahrens ausgetauscht werden. Alternativ oder zusätzlich kann der Prompt für die erneute Ausführung des Verfahrens 100 (zusätzlich zum bisherigen Binärcode) die durch den mindestens einen Patch 40 geänderte Software oder den durch den mindestens einen Patch 40 geänderten Teil der Software umfassen. Auch in diesem Fall, kann der Prompt für die erneute Ausführung des Verfahrens 100 eine Aufforderung umfassen, den mindestens einen Patch 40, insbesondere im Hinblick auf das Bewertungsergebnis, zu verbessern und/oder zu korrigieren.

Anhand **Fig. 1b** wird eine beispielhafte Ausführungsform des Verfahrens 100 näher erläutert.

Gezeigt sind mehrere Inputs, wie z. B. Collections, für ein V & V Framework:
- Binärcode 10 der Software: Beim Binärcode kann es sich z.B. um Binärdateien handeln, die gepatcht werden sollen, aber auch um solche, die auf Vulnerabilitäten untersucht werden sollen, wie z. B. Klassen derselben Software. Es kann auch ein Teil einer Binärdatei sein, z. B. wenn Inline-Assembly verwendet wird oder nur ein Fragment einer ausführbaren Datei.
- eine oder mehrere Beschreibungen 11 mindestens einer bekannten Vulnerabilität: Diese Datenbank kann z.B. durch Standard-CVE-Datenbanken und andere bekannte Vulnerabilitäten (z.B. mit nur intern bekannten Vulnerabilitäten) gefüllt werden.

Ein weiterer nicht in **Fig. 1b** gezeigter Input könnte z.B. bekannte Angriffe und deren Muster umfassen 14: Während die vorherige Datenbank hilft, den Ort eines Fehlers zu identifizieren, kann sie eine Schwachstelle nicht ansteuern und ausnutzen. Dafür sollte eine Art der Ausführung, wie ein Skript oder Programm, verwendet werden. Diese Datenbank enthält solche Skripte, die versuchen, gängige Exploits auf automatisierte Weise auszulösen.

Das V & V Framework enthält z.B. alle (oder einen Teil der) dynamischen 13 und statischen 12 Tests und prüft, ob ein Fehler und insbesondere eine Vulnerabilität vorhanden ist. Die Ausgabe dieses V & V-Frameworks kann z. B. die Stelle des Binärcode sein, an der sich ein Fehler möglicherweise noch befindet, oder dass ein Binärprogramm bestimmte Tests nicht besteht oder dass alles bestanden wurde.
- Statische Tests 12: Zu den statischen Prüfungen gehören statische Analysen, wie die abstrakte Interpretation und die Taint-Analyse, die Fehler aufspüren können (oder zumindest davor warnen, dass ein Fehler und insbesondere eine Vulnerabilität vorhanden sein könnte). Statische Prüfungen führen nicht die Software aus, sondern scannen die Binärdateien selbst.
- Dynamische Tests 13: Dynamische Tests können z.B. Fuzzing umfassen, bei dem das Fuzzing-Tool zahlreiche Eingaben in die zu testende Software generiert, um zu sehen, ob sie mit dieser Eingabe abstürzt. Andere dynamische Tests umfassen Unit-Tests (z.B. speziellere Komponententests), Komponententests und Integrationstests, die die Korrektheit der Software zumindest für die gegebenen Testfälle garantieren.
- Automatisierte Angriffe 14 (Angrifftest): Bei den automatisierten Angriffen kann es sich um die Skripte aus der Datenbank für bekannte Angriffe und deren Muster, z. B. einem automatisierten Exploit, handeln. Damit lässt sich feststellen, ob eine Software noch für einen bestimmten Exploit anfällig ist.
- Vergleichstests 15: Hier geht es darum, die Software mit der durch den Patch geänderten Software zu vergleichen. Die durch den Patch geänderte Software sollte z.B. dieselbe oder eine verbesserte Funktionalität aufweisen.

Nicht dargestellt, sind weitere nicht-funktionale Tests, die die Performanz, Laufzeit und/oder den Speicherbedarf der durch den Patch geänderten Software testen. Diese können ebenfalls im V & V Framework enthalten sein.

Aus einem oder mehreren Tests können als Zwischenergebnisse (sukzessive) bereitgestellt werden:
- Stellen 16 mit anfälligem Code: Wenn das Testergebnis den Ort eines Fehlers oder zumindest eine Warnung vor einem Fehler angibt, dann können diese Stellen als Eingabe in den Prompt 20 eingegeben werden. Dazu können z.B. auch stacktraces von Abstürzen gehören, die durch Fuzzing gefunden wurden. Diese Stellen helfen bei der Lokalisierung des Fehlers, wenn die Binärdateien oder Teile der Binärdateien an den Prompt übergeben werden.
- zu heilende Binärdateien: Hier kann die komplette Binärdatei 10, 50 oder nur ein Teil davon an den Prompt 20 gegeben werden. Eine einfache Kontrollflussanalyse, wie z.B. mit ghidra, kann Verzweigungen und grundlegende Codeblöcke aufdecken, um diese Stellen herauszuschneiden. Im Zweifelsfall kann auch die komplette Binärdatei an den Prompt übergeben werden. Zusammen mit den vulnerablen Codestellen 16 aus den anderen Prompt-Eingaben kann das Maschinenlernmodell 30, insbesondere ein Large Language Model erkennen, wo das konkrete Problem liegt.
- Prompt 20: Dies kann der Prompt für das Large Language Model sein, der z.B., wie in **Fig. 1b** schematisch dargestellt, aus bis zu drei Inputs generiert werden kann, nämlich aus den zu heilenden Binärdateien 10, 50, den vulnerablen Stellen 16 und gegebenenfalls (in erneuter Ausführung des Verfahrens 100) den mindestens einen erzeugten 130 Patch.

Weitere Elemente sind:
- Maschinenlernmodell 30: Das Maschinenlernmodell, insbesondere das Large Language Model wird mit dem Prompt 20 stimuliert, und die Ausgabe ist ein Binärcode als Patch 40, der dann auf das Binärprogramm 10, 50 angewendet wird. Über das V & V Framework kann nun die gepatchte Software 50 auf Korrektheit geprüft werden und insbesondere darauf, ob der identifizierte Fehler behoben wurde.
- Patches 40: Dies ist die Ausgabe des Maschinenlernmodells. Es kann zugleich auch der dritte Input für den Prompt 20 sein, denn auf diese Weise können dem Maschinenlernmodell erneut Patches vorgelegt werden, die bisher noch nicht funktioniert haben.
- Gepatchte Binärdateien 50: Nachdem ein Patch 40 erstellt wurde, kann dieser auf eine Binärdatei (oder mehrere Binärdateien, wenn der Fehler in mehreren vorkommt) angewendet werden. Gepatchte Binärdateien 50, und falls nötig die gesamte gepatchte Software kann als Input für das V & V Framework bereitgestellt werden.
- Freigabe 150: Erst wenn die gepatchte Binärdatei das V & V Framework erfolgreich durchläuft, d.h. funktional korrekt ist und sich die Binärdatei z.B. in Bezug auf die Ausführungsgeschwindigkeit nicht verschlechtert hat, wird die gepatchte Binärdatei freigegeben und kann verteilt werden.

Offenbart wird weiterhin ein computer-implementiertes Verfahren 200 zum weiteren Trainieren eines Maschinenlernmodells 30, wobei das Maschinenlernmodell 30 dafür ausgelegt ist, mindestens einen Patch 40 für eine Vulnerabilität einer Software oder eines Teils der Software basierend auf einem Prompt 20 und einem Binärcode 10 der Software oder deren Teils zu erzeugen 130. Das Maschinenlernmodell 30 kann das Maschinenlernmodell aus dem Verfahren 100 sein. Insbesondere kann das Maschinenlernmodell 30 bereits vorab trainiert sein.

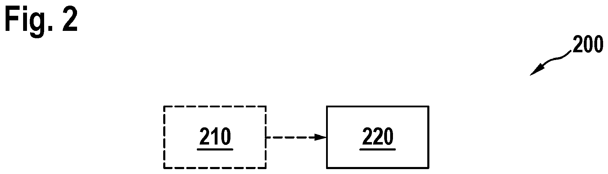

Das Verfahren 200, schematisch illustriert in **Fig. 2****,** umfasst Anpassen 220 des Maschinenlernmodells 30 basierend auf mindestens einem nach dem Verfahren 100 erzeugten 130 Patch und auf einem Bewertungsergebnis für den mindestens einen erzeugten 130 Patch. Das Bewertungsergebnis kann aus dem Verfahren 100 durch Bewerten 140 des mindestens einen Patch 40 resultieren. Alternativ oder zusätzlich können auch ein oder mehrere unabhängig vom Verfahren 100 erzeugte Patches und dazugehörige Bewertungsergebnisse beim Anpassen 220 des Maschinenlernmodells 30 verwendet werden.

Das Verfahren 200 kann, wie z.B. in **Fig. 2****,** Berechnen 210 mindestens einer Belohnung basierend auf dem mindestens einen Bewertungsergebnis umfassen. Das Anpassen 210 des Maschinenlernmodells 30 auf dem mindestens einen Bewertungsergebnis kann dann auf der mindestens einen Belohnung basieren. Hierbei kann die mindestens eine Belohnung umso größer sein, je besser das mindestens eine Bewertungsergebnis ist, und umso niedriger sein, je schlechter das mindestens eine Bewertungsergebnis ist.

Das Anpassen 210 des Maschinenlernmodells 30 kann auf Proximal Policy Optimization (PPO) basieren. Beim Anpassen 210 können ein oder mehrere Parameter (z.B. Gewichte und/oder Neigungen) des Maschinenlernmodells 30 angepasst werden.

Alternativ oder zusätzlich kann das Anpassen des Maschinenlernmodells 30 auch auf überwachtem Lernen basieren. Hierzu kann ebenfalls das Bewertungsergebnis je erzeugtem Patch verwendet werden.

Das frühzeitige Abbrechen beim Bewerten 140, wenn das Bewertungsergebnis bereits hinreichend negativ ist, kann auch für das Verfahren 200 vorteilhaft sein, weil die Rechenzeit dadurch verkürzt wird.

Offenbart wird weiterhin ein Computer-System, das dafür ausgelegt ist, das computer-implementierte Verfahren 100 für die automatisierte Erzeugung eines Patch einer Software oder eines Teils der Software auszuführen. Alternativ oder zusätzlich kann das Computer-System dafür ausgelegt sein, das computer-implementierte Verfahren 200 zum weiteren Trainieren eines Maschinenlernmodells auszuführen. Insbesondere kann das Computer-System dafür ausgelegt sein, das computer-implementierte Verfahren 100 für die automatisierte Erzeugung eines Patch einer Software oder eines Teils der Software und (z.B. im Anschluss) das computer-implementierte Verfahren 200 zum weiteren Trainieren eines Maschinenlernmodells auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die automatisierte Erzeugung eines Patch einer Software oder eines Teils der Software auszuführen. Alternativ oder zusätzlich kann das Computer-Programm dafür ausgelegt sein, das computer-implementierte Verfahren 200 zum weiteren Trainieren eines Maschinenlernmodells auszuführen. Insbesondere kann das Computer-Programm dafür ausgelegt sein, das computer-implementierte Verfahren 100 für die automatisierte Erzeugung eines Patch einer Software oder eines Teils der Software und (z.B. im Anschluss) das computer-implementierte Verfahren 200 zum weiteren Trainieren eines Maschinenlernmodells auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

## Patentansprüche

1. Computer-implementiertes Verfahren (100) für die automatisierte Erzeugung eines Patch einer Software oder eines Teils der Software, insbesondere wobei die Software dafür ausgelegt ist, ein technisches System oder einen Teil davon zu steuern, regeln und/oder zu überwachen, umfassend:
- Erzeugen (130), via ein Maschinenlernmodell (30), mindestens eines Patch (40) für eine Vulnerabilität der Software oder deren Teils basierend auf einem Prompt (20) und einem Binärcode (10) der Software oder deren Teils, optional, wobei das Maschinenlernmodell (30) ein Foundation Model und/oder Large Language Model (LLM) umfasst.

2. Verfahren (100) nach Anspruch 1, wobei die Software dafür ausgelegt ist, in einem cyber-physischen System, insbesondere in mindestens einer Recheneinheit eines Fahrzeugs, eines Roboters oder einer Industrieanlage ausgeführt zu werden.

3. Verfahren (100) nach Anspruch 1 oder 2, wobei die Software für eine sicherheitskritische Aufgabe, insbesondere für eine Wahrnehmungsaufgabe, eine autonome Bewegung, ein Antreiben, ein Bremsen, und/oder ein Airbagsteuern ausgelegt ist.

4. Verfahren (100) nach einem der vorhergehenden Ansprüche, umfassend:
- Dekompilieren (110) des Binärcode (10), wobei ein dekompilierter Code, insbesondere eine Zwischendarstellung des Binärcode, ein Maschinencode und/oder ein Assembly-Code resultiert, wobei das Erzeugen (130) des mindestens einen Patch (40) auf dem dekompilierten Code basiert.

5. Verfahren (100) nach einem der vorhergehenden Ansprüche, umfassend:
- Auffinden (120) der Vulnerabilität basierend auf dem Binärcode (10) und, optional, auf einem Angrifftest (12) und/oder einer Beschreibung (11) mindestens einer bekannten Vulnerabilität.

6. Verfahren (100) nach einem der vorhergehenden Ansprüche, umfassend:
- Bewerten (140) des mindestens einen Patch (40), wobei ein Bewertungsergebnis resultiert.

7. Verfahren (100) nach Anspruch 6, wobei das Bewerten (140) des mindestens einen Patch umfasst:
- einen statischen Test (12) der durch den Patch geänderten Software (50) oder deren durch den Patch geänderten Teil;
- einen dynamischen Test (13) der durch den Patch geänderten Software oder deren durch den Patch geänderten Teil;
- einen Angriffstest (14) der durch den Patch geänderten Software oder deren durch den Patch geänderten Teil;
- einen Vergleichstest (15), der dafür ausgelegt ist, die Software oder deren Teil mit der durch den Patch geänderten Software oder deren durch den Patch geänderten Software zu vergleichen, insbesondere wobei geprüft wird, ob sie im Hinblick auf Funktionalität identisch sind; und/oder
- einen nicht-funktionalen Test der durch den Patch geänderten Software oder deren durch den Patch geänderten Teil, insbesondere wobei der nicht-funktionale Test die Performanz, Laufzeit und/oder den Speicherbedarf der durch den Patch geänderten Software testet;
wobei das Bewertungsergebnis nach einem vorbestimmten Kriterium aus Ergebnissen eines oder mehrerer dieser Tests bestimmt wird.

8. Verfahren (100) nach Anspruch 6 oder 7, wobei der mindestens eine Patch freigegeben (150) wird, wenn das Bewertungsergebnis positiv (OK) ist.

9. Verfahren (100) nach einem der Ansprüche 6 bis 8, wobei das Verfahren (100) nach einem der vorhergehenden Ansprüche wiederholt wird (151), wenn das Bewertungsergebnis negativ (nOK) ist;
optional, wobei mindestens ein weiterer Patch basierend auf dem mindestens einen Patch (40) erzeugt wird.

10. Computer-implementiertes Verfahren (200) zum weiteren Trainieren eines Maschinenlernmodells (30), wobei das Maschinenlernmodell (30) dafür ausgelegt ist, mindestens einen Patch (40) für eine Vulnerabilität einer Software oder eines Teils der Software basierend auf einem Prompt (20) und einem Binärcode (10) der Software oder deren Teils zu erzeugen (130); das Verfahren (200) umfassend:
- Anpassen (220) des Maschinenlernmodells (30) basierend auf mindestens einem nach dem Verfahren (100) nach einem der Ansprüche 1 bis 9 erzeugten (130) Patch und auf mindestens einem nach dem Verfahren (100) nach einem der Ansprüche 6 bis 9 durch Bewerten (140) des mindestens einen Patch (40) resultierenden Bewertungsergebnis.

11. Verfahren (200) nach Anspruch 10, umfassend:
- Berechnen (210) mindestens einer Belohnung basierend auf dem mindestens einen Bewertungsergebnis;
wobei das Anpassen (210) des Maschinenlernmodells (30) basierend auf dem mindestens einen Bewertungsergebnis auf der mindestens einen Belohnung basiert;
optional, wobei die mindestens eine Belohnung größer ist, wenn das mindestens eine Bewertungsergebnis besser ist, und wobei die mindestens eine Belohnung niedriger ist, wenn das mindestens eine Bewertungsergebnis schlechter ist.

12. Verfahren (200) nach Anspruch 10 oder 11, wobei das Anpassen (210) des Maschinenlernmodells (30) auf Proximal Policy Optimization (PPO) basiert.

13. Computer-System, dafür ausgelegt,
das computer-implementierte Verfahren (100) für die automatisierte Erzeugung eines Patch einer Software oder eines Teils der Software nach einem der Ansprüche 1 bis 9 und/oder
das computer-implementierte Verfahren (200) zum weiteren Trainieren eines Maschinenlernmodells nach einem der Ansprüche 10 bis 12 auszuführen.

14. Computer-Programm, dafür ausgelegt,
das computer-implementierte Verfahren (100) für die automatisierte Erzeugung eines Patch einer Software oder eines Teils der Software nach einem der Ansprüche 1 bis 9 und/oder
das computer-implementierte Verfahren (200) zum weiteren Trainieren eines Maschinenlernmodells nach einem der Ansprüche 10 bis 12 auszuführen.

15. Computer-lesbares Medium oder Signal, das das Computer-Programm nach Anspruch 14 speichert und/oder enthält.
